# EUROPEAN PATENT APPLICATION

(11) **EP 4 122 896 A1**
(43) Date of publication of application: **25.01.2023**
(21) Application number: 21771786.7
(22) Date of filing: 15.03.2021
(51) Int. Cl.: C02F 11/121, B30B 9/02

(54) **SEPARATION DEVICE**

(30) Priority: 16.03.2020 JP 2020045821
(71) Applicant: Metawater Co., Ltd., Tokyo 101-0041 (JP)
(72) Inventor: TAN, Masafumi, Tokyo 101-0041 (JP)
(74) Representative: TBK
(86) International application number: PCT/JP2021/010459
(87) International publication number: WO 2021/187444

(57) **Abstract**

Capable of increasing both solid-liquid separation efficiency and cleanability. A separation device 1 includes a casing 10 including an object discharging port 11B on a first direction E1 side than an object feeding port 11A, and a separated liquid discharging port 11C on a second direction E2 side than the object feeding port 11A; a screw shaft 12; a first screw blade 14 having a second surface 14b that faces space S1a into which a pre-object A0 is fed from the object feeding port 11A in the casing 10; and a second screw blade 16 having a first surface 16a that faces the space S1a into which the pre-object A0 is fed from the object feeding port 11A in the casing 10. An end part 14B of the first screw blade 14 on the first direction E1 side is placed on the first direction E1 side than an end part 16B of the second screw blade 16 on the first direction E1 side.

## Description

### Field

The present invention relates to a separation device.

### Background

As described in Patent Literature 1, a separation device that conveys and squeezes sludge, by rotating a screw provided with two screw blades has been known. In the separation device, a first space and a second space interposed between the two screw blades are formed inside a casing, the side surface of which is provided with a sludge feeding port. In the separation device, raw sludge is dehydrated in the first space, and is discharged, and the separated liquid produced by dehydration is made to flow into the second space from the first space via a gap between the outer periphery of the screw blade and the inner periphery of the casing, and is discharged. In such a separation device, a baffle for isolating the second space is provided to suppress sludge from flowing into the second space.

### Citation List

### Patent Literature

Patent Literature 1: WO2015/186612

### Summary

### Technical Problem

In such a separation device, it is more preferable to increase both solid-liquid separation efficiency and cleanability.

The present invention has been made in view of the above, and an object of the present invention is to provide a separation device that can increase both solid-liquid separation efficiency and cleanability.

### Solution to Problem

To solve the problem and achieve the object above, a separation device of the present invention comprises: a casing including an object discharging port provided on a first direction side than an object feeding port into which an object is fed, the object discharging port being configured to discharge the object having been dehydrated, and a separated liquid discharging port provided on a second direction side opposite to the first direction than the object feeding port, the separated liquid discharging port being configured to discharge separated liquid; a screw shaft provided inside the casing and extending in an extending direction of the casing; a first screw blade extending spirally on an outer peripheral surface of the screw shaft, and having a surface directed to the second direction side that faces space into which the object is fed from the object feeding port in the casing; and a second screw blade extending spirally on the outer peripheral surface of the screw shaft such that a predetermined gap is formed with respect to the first screw blade in the extending direction of the screw shaft, and having a surface directed to the first direction side that faces space into which the object is fed from the object feeding port in the casing, wherein an end part of the first screw blade on the first direction side is placed on the first direction side than an end part of the second screw blade on the first direction side.

### Advantageous Effects of Invention

With the present invention, it is possible to increase both solid-liquid separation efficiency and cleanability.

### Brief Description of Drawings

FIG. 1 is a partial sectional view of a separation device according to the present embodiment.
FIG. 2 is a partial enlarged schematic diagram of a cross section of a separation device according to a comparative example.
FIG. 3 is a partial enlarged schematic diagram of a cross section of the separation device according to the present embodiment.
FIG. 4 is a schematic diagram illustrating another example of the present embodiment.

### Description of Embodiments

Hereinafter, a preferred embodiment of the present invention will be described in detail with reference to the accompanying drawings. However, the present invention is not limited to the embodiment described below.

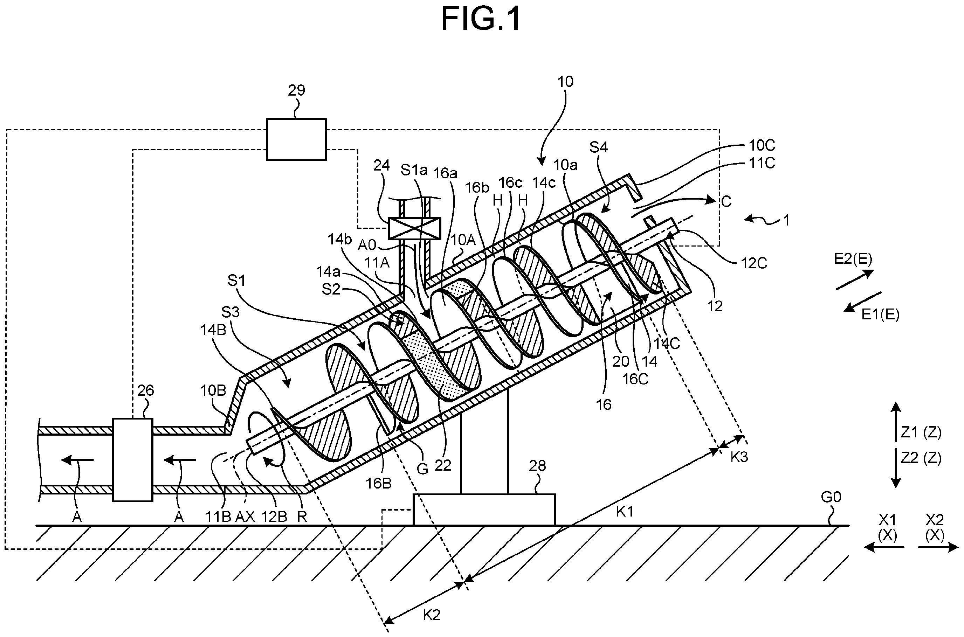

FIG. 1 is a partial sectional view of a separation device according to the present embodiment. As illustrated in FIG. 1, a separation device 1 according to the present embodiment is a screw-type separation device, and includes a casing 10, a screw shaft 12, a first screw blade 14, a second screw blade 16, a partition wall part 20, a cover part 22, a feeding unit 24, a discharge pump 26, an inclination adjusting unit 28, and a control unit 29. The separation device 1 dehydrates a pre-object A0 fed into the casing 10 from an object feeding port 11A, which will be described below, and discharges a concentrated object A having been dehydrated from an object discharging port 11B, which will be described below. Then, the separation device 1 discharges separated liquid C, which is separated from the pre-object A0 by dehydration, from a separated liquid discharging port 11C, which will be described below. The pre-object A0 is an object before being dehydrated by the separation device 1, and in the present embodiment, is sludge such as sewage and industrial liquid waste with high water content. The pre-object A0 may be a flocculated solid component to which a flocculant is added, or may be sludge to which a flocculant is not added and that is not flocculated.

Hereinafter, a direction parallel to a ground surface G0, that is, a horizontal direction, is referred to as a direction X. One direction in the direction X is referred to as a direction X1, and the other direction in the direction X, that is, a direction opposite to the direction X1 is referred to as a direction X2. Moreover, a direction orthogonal to the ground surface G0, that is, a vertical direction, is referred to as a direction Z. Then, one direction in the direction Z, that is, an upward direction in the vertical direction is referred to as a direction Z1, and the other direction in the direction Z, that is, a downward direction in the vertical direction is referred to as a direction Z2.

The casing 10 is a tubular member that extends from one end part 10B to another end part 10C in an extending direction E that is an axial direction, and in which space is formed. The extending direction E is inclined to the direction Z1 side with respect to the direction X2, from the end part 10B side toward the end part 10C side. Thus, the end part 10B of the casing 10 is placed at the direction Z2 side than the end part 10C. Hereinafter, in the extending direction E, a direction from the end part 10C side toward the end part 10B side (direction X1 side) is referred to as a first direction E1, and a direction opposite to the first direction E1, that is, a direction from the end part 10B side toward the end part 10C side (direction X2 side) is referred to as a second direction E2.

In the casing 10, the object feeding port 11A is opened on the side surface (outer peripheral surface) of a middle part 10A, the object discharging port 11B is opened on the first direction E1 side than the object feeding port 11A, and the separated liquid discharging port 11C is opened on the second direction E2 side than the object feeding port 11A. In the present embodiment, the object discharging port 11B is opened on the end part 10B of the casing 10, and the separated liquid discharging port 11C is opened on the end part 10C of the casing 10. The middle part 10A is placed on the center of the casing 10 in the extending direction E, but may also be placed on any position between the end part 10B and the end part 10C in the extending direction E. The object feeding port 11A is not limited to be provided on the side surface of the casing 10. For example, the object feeding port 11A may be formed on the screw shaft 12 in the casing 10. In this case, for example, the object feeding port 11A is opened on the outer peripheral surface of the screw shaft 12 in a first space S1, which will be described below, between the object discharging port 11B and the separated liquid discharging port 11C in the extending direction E. In this case, a flow passage to which the pre-object A0 is supplied from the outside of the separation device 1 and that communicates with the object feeding port 11A is formed inside the screw shaft 12.

Beside the object feeding port 11A, the object discharging port 11B, and the separated liquid discharging port 11C, a hole that communicates the inside with the outside is not formed in the casing 10, but an opening may also be formed in the casing 10 in addition to the object feeding port 11A, the object discharging port 11B, and the separated liquid discharging port 11C. However, unlike a screen such as a mesh and punched plate, a large number of openings are not formed over the entire range of the casing 10.

The screw shaft 12 is formed in a cylindrical shape, is provided inside the casing 10, and extends in the extending direction E. In the screw shaft 12, at least one of an end part 12B on the first direction E1 side and an end part 12C on the second direction E2 side is coupled to a motor, which is axially supported by a bearing (neither is illustrated). When the motor is driven by the control unit 29, the screw shaft 12 is rotated in a rotation direction R with the extending direction E as an axial center. In the present embodiment, when viewed from the end part 12C side, the rotation direction R is a counterclockwise direction. However, it is not limited thereto.

The first screw blade 14 is provided so as to extend spirally on the outer peripheral surface of the screw shaft 12 in the casing 10, from one end part 14B to another end part 14C. The end part 14B is an end part on the first direction E1 side, and is placed on the object discharging port 11B side than the object feeding port 11A. The end part 14C is an end part on the second direction E2 side, and is placed on the separated liquid discharging port 11C side than the object feeding port 11A. The first screw blade 14 has a first surface 14a, which is a surface directed to the first direction E1 side, and a second surface 14b, which is a surface directed to the second direction E2 side. Because the first screw blade 14 is wounded spirally, a virtual straight line that penetrates through the first screw blade 14 in the extending direction E alternately intersects the first surface 14a and the second surface 14b, as the virtual straight line extends in the extending direction E.

The first screw blade 14 is wound in a direction opposite to the rotation direction R, from the end part 14C toward the end part 14B. That is, when the rotation direction R is a counterclockwise direction when viewed from the end part 12C side, the first screw blade 14 is provided in what is called a Z-winding (right hand) spiral. Alternatively, when the rotation direction R is a clockwise direction when viewed from the end part 12C side, the first screw blade 14 is provided in what is called an S-winding (left hand) spiral. The first screw blade 14 is rotated with the rotation of the screw shaft 12.

An outer peripheral part 14c of the first screw blade 14 does not come into contact with an inner peripheral surface 10a of the casing 10, and a gap H is formed between the outer peripheral part 14c and the inner peripheral surface 10a. The gap H is a minute clearance, has a size capable that keeps at least a part of the concentrated object A from passing therethrough (or blocks the concentrated object A), and is large enough so that a liquid component such as the separated liquid C can pass therethrough. For example, the gap H is a clearance of about 1 mm or more and 2 mm or less.

In the casing 10, the second screw blade 16 extends spirally on the outer peripheral surface of the screw shaft 12 in the extending direction E. The second screw blade 16 is provided on a position shifted from the first screw blade 14 such that a predetermined gap is formed with respect to the first screw blade 14 in the extending direction E, and is wound in the same winding direction as that of the first screw blade 14. The second screw blade 16 is also rotated with the rotation of the screw shaft 12. The second screw blade 16 has a first surface 16a, which is a surface directed to the first direction E1 side, and a second surface 16b, which is a surface directed to the second direction E2 side. Because the second screw blade 16 is wounded spirally, a virtual straight line that penetrates through the second screw blade 16 in the extending direction E alternately intersects the first surface 16a and the second surface 16b, as the virtual straight line extends in the extending direction E.

An outer peripheral part 16c of the second screw blade 16 does not come into contact with the inner peripheral surface 10a of the casing 10, and the gap H is formed between the outer peripheral part 16c and the inner peripheral surface 10a.

The second screw blade 16 extends spirally from one end part 16B to another end part 16C. The end part 16B is an end part on the first direction E1 side, and is placed on the object discharging port 11B side than the object feeding port 11A. The end part 16C is an end part on the second direction E2 side, and is placed on the separated liquid discharging port 11C side than the object feeding port 11A.

The end part 14B of the first screw blade 14 is placed on the first direction E1 side than the end part 16B of the second screw blade 16. That is, the first screw blade 14 extends to the first direction E1 side than the second screw blade 16. A partition wall part is not provided but a gap G is formed between the end part 16B of the second screw blade 16 and the first screw blade 14. The width of the gap G (the distance between the end part 16B of the second screw blade 16 and the first screw blade 14) is longer than the length of the gap H (the distance between the inner peripheral surface 10a of the casing 10 and the outer peripheral part of the first screw blade 14 and the second screw blade 16).

In the example of FIG. 1, the end part 14C of the first screw blade 14 is placed on the second direction E2 side than the end part 16C of the second screw blade 16. However, the positional relationship between the end part 14C and the end part 16C is not limited to the above description and is optional.

The partition wall part 20 is provided between the end part 16C of the second screw blade 16 and the first screw blade 14. The partition wall part 20 is a wall-like member provided across the end part 16C of the second screw blade 16 to the first screw blade 14 adjacent to the end part 16C in the first direction E1. The partition wall part 20 is provided so as to separate the first space S1 and space S4, which will be described below, and shields the first space S1 from the space S4, which will be described below. The position where the partition wall part 20 is provided is not limited to the end part 16C, and may be any position as long as the partition wall part 20 is on the second direction E2 side than the object feeding port 11A. However, the partition wall part 20 is not an essential component, and may be omitted.

Because the first screw blade 14 and the second screw blade 16 are provided on the positions as described above, the first screw blade 14 and the second screw blade 16 are both provided in a section from the end part 16B to the end part 16C of the second screw blade 16 (hereinafter, this section will be referred to as a conveyance acceleration section K1). Moreover, the first screw blade 14 is provided but the second screw blade 16 is not provided in a section from the end part 14B of the first screw blade 14 to the end part 16B of the second screw blade 16 (hereinafter, this section will be referred to as an object conveyance section K2). Furthermore, the first screw blade 14 is provided but the second screw blade 16 is not provided in a section from the end part 14C of the first screw blade 14 to the end part 16C of the second screw blade 16 (hereinafter, this section will be referred to as a separated liquid conveyance section K3).

The conveyance acceleration section K1 is a double screw section in which the first screw blade 14 and the second screw blade 16 are provided. When viewed from the radial direction of the center axis AX, at least a part of the section of the conveyance acceleration section K1 is set so as to overlap with the object feeding port 11A. In the conveyance acceleration section K1, the first space S1 in which the pre-object A0 and the concentrated object A are conveyed, and a second space S2 in which the separated liquid C is conveyed are formed.

The object conveyance section K2 is a section on the first direction E1 side than the conveyance acceleration section K1. Space S3 in the object conveyance section K2 communicates with the object discharging port 11B and the first space S1 of the conveyance acceleration section K1.

The separated liquid conveyance section K3 is a section on the second direction E2 side than the conveyance acceleration section K1. Space S4 in the separated liquid conveyance section K3 communicates with the separated liquid discharging port 11C and the second space S2 of the conveyance acceleration section K1. Because the space S4 is shielded by the partition wall part 20, in a region other than the gap H, the space S4 is isolated from the first space S1 in the conveyance acceleration section K1. In the present embodiment, the separated liquid conveyance section K3 is a single screw section in which the first screw blade 14 is provided but the second screw blade 16 is not provided. However, for example, when the end part 14C of the first screw blade 14 and the end part 16C of the second screw blade 16 are provided on the same position in the extending direction E, the separated liquid conveyance section K3 will be a section in which neither the first screw blade 14 nor the second screw blade 16 is provided.

The cover part 22 is provided in a region overlapping with the object feeding port 11A, between the first screw blade 14 and the second screw blade 16 that form the second space S2. The cover part 22 can suppress the pre-object A0 from the object feeding port 11A from being fed into the second space S2, by covering the outer periphery of the second space S2 in a section overlapping with the object feeding port 11A. However, the cover part 22 is not an essential component. For example, if the object feeding port 11A is provided on a position not overlapping with the second space S2, it is possible to suppress the pre-object A0 from being fed into the second space S2, and thus the cover part 22 will not be required.

The feeding unit 24 is a device connected to the object feeding port 11A and that controls the feeding amount of the pre-object A0 into the casing 10. For example, the feeding unit 24 is an opening/closing valve, a pump that conveys the pre-object A0, or the like.

The discharge pump 26 is a pump connected to the object discharging port 11B. When the discharge pump 26 is stopped, the concentrated object A transferred to the end part 10B of the casing 10 is blocked. Moreover, when the discharge pump 26 is being driven, the discharge pump 26 forcibly discharges the concentrated object A in the casing 10 from the object discharging port 11B by sucking. However, the discharge pump 26 is not an essential component, and for example, the concentrated object A may be discharged by gravity.

The inclination adjusting unit 28 is fixed to the casing 10, and changes the inclination angle of the casing 10. However, the inclination adjusting unit 28 is not an essential component, and the inclination angle may be constant.

The control unit 29 is a control device that controls the operation of the separation device 1. The control unit 29 controls at least one of the rotation of the screw shaft 12 by the motor, the feeding amount of the pre-object A0 by the feeding unit 24, the operation of the discharge pump 26, which is the discharge amount of the concentrated object A in the casing 10, and the inclination angle by the inclination adjusting unit 28. For example, the control unit 29 is an arithmetic device, that is, a computer including a central processing unit (CPU), and controls the operation of the separation device 1 by the calculation of the CPU.

### Positions of First Screw Blade and Second Screw Blade with respect to Space

In the separation device 1 formed as described above, the surfaces of the first screw blade 14 and the second screw blade 16 are placed with respect to each space (first space S1, second space S2, or the like) in the casing 10, as will be described below. Hence, between the first screw blade 14 and the second screw blade 16, the second screw blade 16 is the screw blade on the side that conveys the pre-object A0 to the first direction E1 side in the first space S1. Hereinafter, detailed description will be made on the arrangement of the first screw blade 14 and the second screw blade 16.

As illustrated in FIG. 1, the first space S1 is formed between the first surface 16a of the second screw blade 16 and the second surface 14b of the first screw blade 14 that faces the first surface 16a. The first surface 16a of the second screw blade 16 faces the first space S1 on the second direction E2 side of the first space S1, and the second surface 14b of the first screw blade 14 faces the first space S1 on the first direction E1 side of the first space S1. In this manner, because the first surface 16a of the second screw blade 16 faces the first space S1 on the second direction E2 side, the first surface 16a presses the pre-object A0 in the first space S1 to the first direction E1 side, with the rotation of the screw shaft 12. Because the first space S1 communicates with the object feeding port 11A, the first surface 16a of the second screw blade 16 and the second surface 14b of the first screw blade 14 face a position (space S1a) into which the pre-object A0 is fed from the object feeding port 11A in the first space S1.

As illustrated in FIG. 1, the second space S2 is formed between the second surface 16b of the second screw blade 16 and the first surface 14a of the first screw blade 14 that faces the second surface 16b. The second surface 16b of the second screw blade 16 faces the second space S2 on the first direction E1 side of the second space S2, and the first surface 14a of the first screw blade 14 faces the second space S2 on the second direction E2 side of the second space S2. Moreover, because the cover part 22 is provided in the second space S2, the second surface 16b of the second screw blade 16 and the first surface 14a of the first screw blade 14 face the space (second space S2) where the cover part 22 is provided, between the two spaces (first space S1 and second space S2) adjacent to each other in the extending direction E with the screw blade interposed therebetween.

The distance in the extending direction E between the first surface 16a of the second screw blade 16 and the second surface 14b of the first screw blade 14 that faces the first surface 16a (that is, the length of the first space S1 in the extending direction) is preferably longer than the distance in the extending direction E between the second surface 16b of the second screw blade 16 and the first surface 14a of the first screw blade 14 that faces the second surface 16b (that is, the length of the second space S2 in the extending direction E). Thus, the volume of the first space S1 is larger than the volume of the second space S2. Consequently, the first surface 16a of the second screw blade 16 and the second surface 14b of the first screw blade 14 face the space (first space S1) with a larger volume, between the two spaces (first space S1 and second space S2) adjacent to each other in the extending direction E with the screw blade interposed therebetween.

### Operation of Separation Device

Next, an operation of the separation device 1 formed as described above, and behavior of an object will be described. The control unit 29 controls the feeding unit 24, and feeds the pre-object A0 into the casing 10 from the object feeding port 11A. As illustrated in FIG. 1, because the position of the object feeding port 11A is overlapped with the conveyance acceleration section K1, the pre-object A0 from the object feeding port 11A is fed into the first space S1 (space S1a) in the conveyance acceleration section K1. The control unit 29 rotates the screw shaft 12. The pre-object A0 fed into the first space S1 moves to the first direction E1 side, by gravity and by being pressed by the first surface 16a of the second screw blade 16, while the liquid component is separated. The solid component of the pre-object A0 in the first space S1 flows through the first space S1 into the space S3 that communicates with the first space S1, while the solid component is suppressed from flowing into the second space S2, because the solid component cannot easily pass through the gap H. Then, the solid component of the pre-object A0 that has flowed into the space S3 is discharged to the outside of the casing 10 from the object discharging port 11B as the concentrated object A, from which the liquid component is separated, by the discharge pump 26 driven by the control unit 29. On the other hand, the liquid component separated from the pre-object A0 flows into the second space S2 through the gap H, as the separated liquid C, and with an increase in the liquid level, flows through the second space S2 toward the second direction E2 side, flows into the space S4, and is discharged to the outside of the casing 10 from the separated liquid discharging port 11C.

In this example, a partition wall part that isolates between the second space S2 and the space S3 is not provided between the end part 16B of the second screw blade 16 and the first screw blade 14, and the second space S2 and the space S3 communicate with each other via the gap G. Thus, with the separation device 1, it is possible to suppress the solid components from being accumulated on the partition wall part, and easily clean the separation device 1. For example, during cleaning, by pouring cleaning water into the casing 10 from the object feeding port 11A, the cleaning solution passes through the second space S2 into the space S3, and is discharged through the object discharging port 11B with the solid components. Then, it is possible to easily clean the inside of the second space S2. In this manner, cleaning becomes easy by not providing a partition wall part. However, because the space S3 and the second space S2 communicate with each other, the solid component may flow into the second space S2 from the space S3, and may decrease the solid-liquid separation efficiency. In contrast, in the separation device 1 according to the present embodiment, the end part 14B of the first screw blade 14, which does not press the pre-object A0 in the first space S1, is extended to the first direction E1 side than the end part 16B of the second screw blade 16, which presses the pre-object A0 in the first space S1. Hence, it is possible to suppress the solid component from flowing into the second space S2 from the space S3. Hereinafter, detailed description will be made.

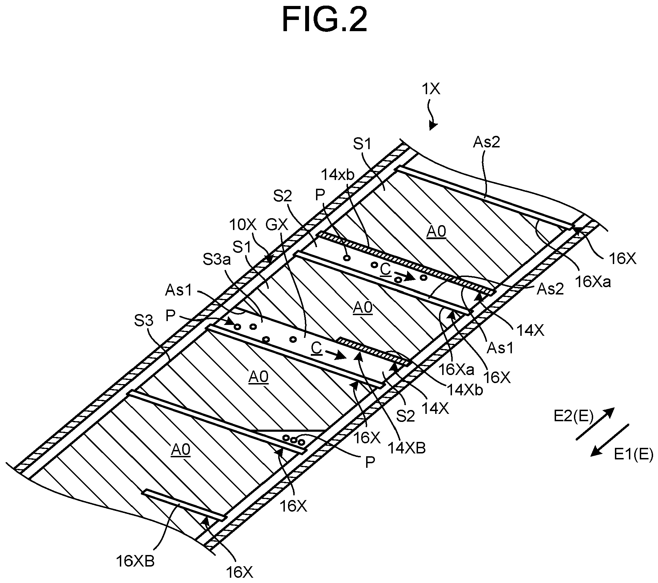

FIG. 2 is a partial enlarged schematic diagram of a cross section of a separation device according to a comparative example. As illustrated in FIG. 2, a separation device 1X according to the comparative example differs from the present embodiment in that an end part 16XB of a second screw blade 16X is in the first direction E1 than an end part 14XB of a first screw blade 14X. Moreover, in the comparative example, a partition wall part is not provided but a gap GX is formed between the end part 14XB of the first screw blade 14X and the second screw blade 16. As illustrated in FIG. 2, in the first space S1 of a casing 10X, the pre-object A0 moves to the first direction E1 side, while a surface As1 of the pre-object A0 on the first direction E1 side is held by a second surface 14Xb of the first screw blade 14X, and a surface As2 of the pre-object A0 on the second direction E2 side is pressed by a first surface 16Xa of the second screw blade 16X. On the other hand, in space S3a, which is a position in the vicinity of the end part 14XB in the space S3, the surface As1 of the pre-object A0 is not held by the second surface 14Xb of the first screw blade 14X and is opened, because the first screw blade 14X is cut off in the middle. However, because buoyancy is applied to the pre-object A0 by the separated liquid C present in the space S3a, the speed of the second screw blade 16, which is below the pre-object A0, moving downward by the rotation becomes faster than the speed of the pre-object A0 sinking downward (first direction E1 side). Hence, in the space S3a, the layer of the pre-object A0 and the layer of the separated liquid C thereunder (first direction E1 side) remain separated. Thus, the layer of the separated liquid C in the space S3a communicates with the second space S2 via the gap GX, and a solid component P contained in the layer of separated liquid C in the space S3a flows into the second space S2, and mixes with the separated liquid C. Hence, the solid-liquid separation efficiency will be decreased.

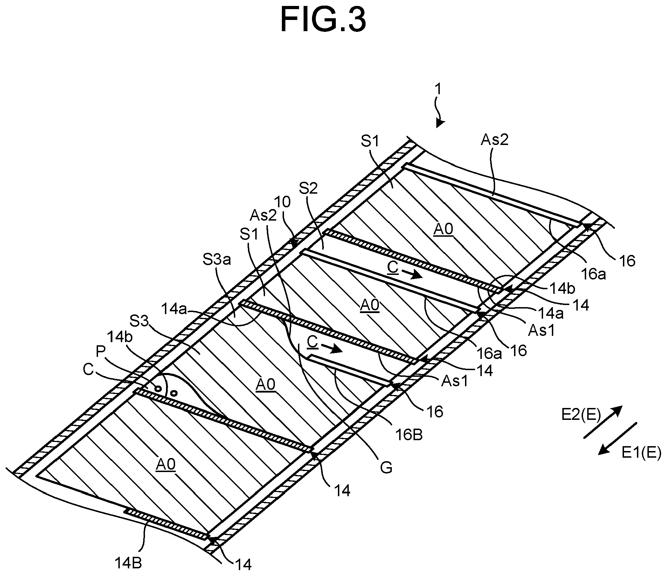

FIG. 3 is a partial enlarged schematic diagram of a cross section of the separation device according to the present embodiment. As illustrated in FIG. 3, in the separation device 1 according to the present embodiment, the end part 14B of the first screw blade 14 is placed on the first direction E1 side than the end part 16B of the second screw blade 16. As illustrated in FIG. 3, in the first space S1, the pre-object A0 moves to the first direction E1 side, while the surface As1 is held by the second surface 14b of the first screw blade 14, and the surface As2 is pressed by the first surface 16a of the second screw blade 16. In the space S3a, which is a position in the vicinity of the end part 16B in the space S3, the surface As2 of the pre-object A0 is opened, because the second screw blade 16 that has been pressing the pre-object A0 is cut off in the middle. In the space S3a, due to buoyancy applied by the separated liquid C, the speed of the first screw blade, which is above the pre-object A0 (second direction E2 side), moving downward by the rotation becomes faster than the speed of the pre-object A0 sinking downward (first direction E1 side). Hence, the first screw blade 14 on the upper side approaches the pre-object A0 side, and the surface As2 of the pre-object A0 comes into contact with the first surface 14a of the first screw blade 14, which is above the end part 16B. Thus, the pre-object A0 in the space S3a blocks the gap G that communicates the space S3a with the second space S2, functions the same as the partition wall part, and suppresses the solid components P contained in the layer of the separated liquid C from flowing into the second space S2. The pre-object A0 the surface As2 of which is brought into contact with the first surface 14a of the first screw blade 14, is pressed by the first surface 14a of the first screw blade 14 and moves in the first direction E1. In this manner, in the present embodiment, by placing the end part 14B of the first screw blade 14 on the first direction E1 side than the end part 16B of the second screw blade 16, in the space S3a (end part 16B), the screw blade that presses the pre-object A0 is switched from the second screw blade 16 to the first screw blade 14. Consequently, the gap G is blocked by the pre-object A0 in the space S3a, and the solid component P is suppressed from flowing into the second space S2. Moreover, because the separated liquid C in the space S3 is filtered by passing through the pre-object A0 that is blocking the gap G, it is possible to suppress a decrease in the solid-liquid separation efficiency. During cleaning, it is possible to easily discharge the pre-object A0 that is blocking the gap G by the cleaning solution.

As described above, the separation device 1 according to the present embodiment includes the casing 10, the screw shaft 12, the first screw blade 14, and the second screw blade 16. The casing 10 includes the object discharging port 11B that is provided on the first direction E1 side than the object feeding port 11A and that discharges the concentrated object A having been dehydrated, and the separated liquid discharging port 11C that is provided on the second direction E2 side than the object feeding port 11A and that discharges the separated liquid C. The screw shaft 12 is provided inside the casing 10, and extends in the extending direction E of the casing 10. The first screw blade 14 extends spirally on the outer peripheral surface of the screw shaft 12, and the second surface 14b, which is a surface directed to the second direction E2 side, faces the space S1a into which the pre-object A0 is fed from the object feeding port 11A in the casing 10. The second screw blade 16 extends spirally on the outer peripheral surface of the screw shaft 12 such that a predetermined gap is formed with respect to the first screw blade 14 in the extending direction E of the screw shaft 12, and the first surface 16a, which is a surface directed to the first direction E1 side, faces the space S1a. The end part 14B of the first screw blade 14 on the first direction E1 side is placed on the first direction E1 side than the end part 16B of the second screw blade 16 on the first direction E1 side. In the separation device 1 according to the present embodiment, the first screw blade 14 extends to the first direction E1 side than the second screw blade 16 that presses the pre-object A0 in the first space S1. With the separation device 1 according to the present embodiment, the screw blade that presses the pre-object A0 in the space S3a is switched from the second screw blade 16 to the first screw blade 14. Hence, it is possible to block the gap G by the pre-object A0 in the space S3a, and suppress the solid component P from flowing into the second space S2. Thus, with the separation device 1 according to the present embodiment, cleaning becomes easy without providing a partition wall part, and it is possible to suppress a decrease in the solid-liquid separation efficiency, by suppressing the solid component P from flowing into the second space S2 by the pre-object A0. In this manner, with the separation device 1 according to the present embodiment, it is possible to increase both cleanability and solid-liquid separation efficiency.

Moreover, the second screw blade 16 presses the pre-object A0 to the first direction E1 side, on the second direction E2 side than the end part 16B, and the first screw blade 14 presses the pre-object A0 to the first direction E1 side, on the first direction E1 side than the end part 16B of the second screw blade 16. With the separation device 1, by switching the screw blade that presses the pre-object A0 from the second screw blade 16 to the first screw blade 14, it is possible to increase both cleanability and solid-liquid separation efficiency.

Moreover, the gap G is formed between the end part 16B of the second screw blade 16 and the first screw blade 14. With the separation device 1, by forming the gap G without providing a partition wall part between the end part 16B of the second screw blade 16 and the first screw blade 14, it is possible to increase both cleanability and solid-liquid separation efficiency.

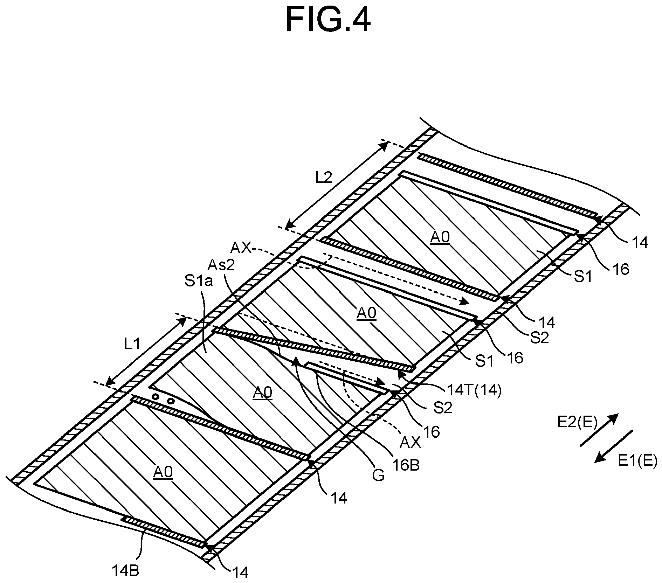

FIG. 4 is a schematic diagram illustrating another example of the present embodiment. In the above description, the opening area of the gap G is the same size as the opening area of the second space S2 on the second direction E2 side than the gap G. However, for example, as illustrated in FIG. 4, the opening area of the gap G may be formed smaller than the opening area of the second space S2. In this example, the opening area refers to the area of the second space S2 or the gap G when viewed from the extending direction of the second space S2 that extends spirally, in other words, when viewed from a direction along the spiral center line AX in the second space S2. In the example of FIG. 4, the opening area of the gap G is formed smaller than the opening area of the second space S2, by making the pitch of a portion 14T of the first screw blade 14 that faces the first direction E1 side of the end part 16B of the second screw blade 16 different from the pitch of portions other than the portion 14T. More specifically, the pitch of the portion 14T is set such that the distance L1 between the portion 14T of the first screw blade 14 and the first screw blade 14 adjacent to the portion 14T on the first direction E1 side is formed smaller than the distance L2 between the first screw blades 14 adjacent to each other in the extending direction E other than the portion 14T. Consequently, it is possible to reduce the distance in the extending direction E between the end part 16B of the second screw blade 16 and the first screw blade 14 that faces the upper part of the end part 16B (second direction E2 side), and shorten the time of the first screw blade 14 on the upper side reaching the surface As2 of the pre-object A0, which is released from the second screw blade 16. Hence, it is possible to quickly shift the role of pressing the pre-object A0, from the second screw blade 16 to the first screw blade 14. Thus, it is possible to suppress a decrease in the discharge efficiency of the pre-object A0. The method of reducing the opening area of the gap G is not limited to making the pitch of the portion 14T of the first screw blade 14 different. For example, the pitch of a portion of the end part 16B of the second screw blade 16 may be made different from the pitch of portions other than the end part 16B of the second screw blade 16.

The embodiments of the present invention have been described. However, the embodiments are not limited to the content of the embodiments and the like. Moreover, the components described above include components that can be easily assumed by those skilled in the art, components that are substantially the same, and components within a so-called range of equivalents. Furthermore, the components described above can be appropriately combined. Still furthermore, various omissions, substitutions, and changes of the components may be made without departing from the spirit of the embodiment or the like described above.

### Reference Signs List

- 1: separation device
- 10: casing
- 11A: object feeding port
- 11B: object discharging port
- 11C: separated liquid discharging port
- 12: screw shaft
- 14: first screw blade
- 14B: end part
- 14a, 16a: first surface
- 14b, 16b: second surface
- 16: second screw blade
- 16B: end part
- E1: first direction
- E2: second direction
- S1: first space
- S2: second space

## Claims

1. A separation device, comprising:
a casing including an object discharging port provided on a first direction side than an object feeding port into which an object is fed, the object discharging port being configured to discharge the object having been dehydrated, and a separated liquid discharging port provided on a second direction side opposite to the first direction than the object feeding port, the separated liquid discharging port being configured to discharge separated liquid;
a screw shaft provided inside the casing and extending in an extending direction of the casing;
a first screw blade extending spirally on an outer peripheral surface of the screw shaft, and having a surface directed to the second direction side that faces space into which the object is fed from the object feeding port in the casing; and
a second screw blade extending spirally on the outer peripheral surface of the screw shaft such that a predetermined gap is formed with respect to the first screw blade in the extending direction of the screw shaft, and having a surface directed to the first direction side that faces space into which the object is fed from the object feeding port in the casing, wherein
an end part of the first screw blade on the first direction side is placed on the first direction side than an end part of the second screw blade on the first direction side.

2. The separation device according to claim 1, wherein
the second screw blade presses the object to the first direction side, on the second direction side than the end part of the second screw blade on the first direction side, and
the first screw blade presses the object to the first direction side, on the first direction side than the end part of the second screw blade on the first direction side.

3. The separation device according to claim 1 or 2, wherein a gap is formed between the end part of the second screw blade on the first direction side and the first screw blade.
